(19) Europäisches Patentamt / European Patent Office / Office européen des brevets

(11) **EP 3 464 044 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(21) Anmeldenummer: **17715113.1**

(22) Anmeldetag: **31.03.2017**

(51) Int Cl.:
**B62M 6/45** (2010.01)

(86) Internationale Anmeldenummer:
**PCT/EP2017/057699**

(87) Internationale Veröffentlichungsnummer:
**WO 2017/207132 (07.12.2017 Gazette 2017/49)**

(54) **STEUERUNGSVERFAHREN UND VORRICHTUNGEN ZUR STEUERUNG DES ELEKTROMOTORS EINES ELEKTROFAHRRADS**

CONTROL-UNIT AND METHOD FOR ELECTRICALLY ASSISTED BICYCLE

COMMANDE ET MÉTHODE POUR BICYCLETTE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 DE 102016209275**

(43) Veröffentlichungstag der Anmeldung:
**10.04.2019 Patentblatt 2019/15**

(60) Teilanmeldung:
**20214706.2 / 3 825 217**

(73) Patentinhaber: **Robert Bosch GmbH**
**70442 Stuttgart (DE)**

(72) Erfinder: **DASBACH, Gregor**
**72074 Tuebingen (DE)**

(56) Entgegenhaltungen:
**EP-A1- 2 604 499          EP-A1- 2 862 788**
**EP-A2- 1 236 640          DE-A1-102012 107 938**
**DE-A1-102013 004 886    DE-T2- 60 110 853**

EP 3 464 044 B1

**Beschreibung**

Die vorliegende Erfindung betrifft ein Steuerungsverfahren zur Steuerung des Elektromotors eines Elektrofahrrads und ein Steuergerät, welches das Steuerungsverfahren ausführt, sowie ein Elektrofahrrad mit dem Steuergerät.

Stand der Technik

In der Schrift DE 10 2010 028 658 A1 ist ein Elektrofahrrad beschrieben, wobei der Elektromotor ein Drehmoment zum Antrieb des Elektrofahrrads erzeugt. Die Steuerung des Motordrehmoments erfolgt in dieser Schrift in Abhängigkeit des Tretdrehmomentes des Radfahrers. Außerdem ist eine Schaltung einer elektronisch steuerbaren Gangschaltung des Elektrofahrrades in Abhängigkeit wenigstens eines Ist-Betriebsparameters offenbart. Der Ist-Betriebsparameter kann das Tretdrehmoment oder eine Trittfrequenz des Radfahrers umfassen. Die Schrift offenbart jedoch keine Steuerung des Motordrehmoments in Abhängigkeit von zwei weiteren Schwellenwerten wie beansprucht.

Offenbarung der Erfindung

Die vorliegende Erfindung betrifft ein Steuerungsverfahren zur Steuerung des Elektromotors eines Elektrofahrrads in Abhängigkeit eines eingelegten Übersetzungsverhältnisses einer Gangschaltung und ein Steuergerät, welches das Steuerungsverfahren ausführt, sowie ein Elektrofahrrad mit dem Steuergerät.

Das erfindungsgemäße Steuerungsverfahren umfasst wenigstens eine Erfassung eines Tretdrehmoments des Radfahrers und eine Erfassung des eingelegten Übersetzungsverhältnisses der Gangschaltung. Durch eine Steuerung des Elektromotors in Abhängigkeit des erfassten Tretdrehmomentes und des erfassten Übersetzungsverhältnisses wird ein Drehmoment für den Antrieb des Elektrofahrrads erzeugt. Dadurch wird für den Radfahrer eine angenehme Motorsteuerung beim Fahren realisiert.

In einer bevorzugten Ausgestaltung der Erfindung weist das Steuerungsverfahren einen Vergleich des erfassten Übersetzungsverhältnisses mit einem unmittelbar vorher erfassten Übersetzungsverhältnis der Gangschaltung auf. Beim Erkennen einer Änderung des Übersetzungsverhältnisses erfolgt die Steuerung des Motordrehmoments. Das Motordrehmoment wird dabei zur Realisierung einer gleichbleibenden Gesamtleistung des Elektrofahrrads unter Annahme eines gleichbleibenden Tretdrehmoments des Radfahrers gesteigert, wenn das Übersetzungsverhältnis erhöht wird. Das Motordrehmoment wird gesenkt, wenn das Übersetzungsverhältnis beim Schalten reduziert wird. Das Tretdrehmoment des Radfahrers kann demnach beim Schalten konstant bleiben. Die bevorzugte Ausgestaltung weist den Vorteil auf, dass ein sehr komfortables Fahrgefühl beim Schalten entsteht.

Erfindungsgemäß umfasst das Steuerungsverfahren eine Erfassung einer aktuellen Trittfrequenz des Radfahrers. Die Steuerung des Motordrehmoments wird zusätzlich in Abhängigkeit der erfassten Trittfrequenz durchgeführt. Dadurch kann die Steuerung des Motordrehmoments an die Trittfrequenz des Radfahrers angepasst werden. Das Produkt aus dem Tretdrehmoment und der Trittfrequenz des Radfahrers repräsentiert außerdem die Leistung des Radfahrers. Die Steuerung des Motordrehmoments kann in dieser Ausgestaltung demnach in Abhängigkeit der Leistung des Radfahrers erfolgen. Dies weist den Vorteil einer für den Radfahrer angenehmeren Steuerung des Motordrehmoments auf.

Weiterhin erfolgt erfindungsgemäß eine Steuerung des Motordrehmoments nach einem Vergleich der erfassten Trittfrequenz mit einem Schwellenwert. Es sind insbesondere ein erster Schwellenwert bei einer niedrigen Trittfrequenz und ein zweiter Schwellenwert bei einer hohen Trittfrequenz vorgesehen. Der erste Schwellenwert repräsentiert ein bevorstehendes Schalten der Gangschaltung in ein kleineres Übersetzungsverhältnis. Beim Erreichen oder Überschreiten des ersten Schwellenwerts wird das Motordrehmoment reduziert. Der zweite Schwellenwert repräsentiert ein bevorstehendes Schalten der Gangschaltung in ein größeres Übersetzungsverhältnis. Beim Erreichen oder Überschreiten des zweiten Schwellenwerts wird das Motordrehmoment erhöht. Durch den Vergleich mit dem ersten Schwellenwert und dem zweiten Schwellwert der Trittfrequenz wird demnach eine bevorstehende Schaltung des Übersetzungsverhältnisses der Gangschaltung erkannt. Durch die Anpassung des Motordrehmoments vor der Schaltung des Übersetzungsverhältnisses können Drehmomentsprünge des Elektromotors beim Schalten minimiert werden. Gleichzeitig wird durch die Steuerung des Motordrehmoments ein Schalten der Gangschaltung noch wahrscheinlicher. Dadurch resultiert eine auf das Fahrverhalten des Radfahrers abgestimmte Steuerung des Motordrehmoments beim Schalten.

Vorzugsweise erfolgt die Steuerung des Motordrehmoments stetig. Dadurch werden Sprünge des Motordrehmoments vermieden, wodurch vorteilhafterweise eine angenehme Kraftunterstützung für den Radfahrer resultiert.

Weiterhin erfolgt erfindungsgemäß ein Vergleich der erfassten Trittfrequenz mit mindestens einem weiteren Schwellenwert, wobei insbesondere ein dritter Schwellenwert und ein vierter Schwellenwert vorgesehen sind. Beim Erreichen oder Überschreiten des dritten Schwellenwerts wird eine Schaltung einer elektronisch steuerbaren Gangschaltung in ein niedrigeres Übersetzungsverhältnis durchgeführt. Beim Erreichen oder Überschreiten des vierten Schwellenwerts erfolgt eine Schaltung der elektronisch steuerbaren Gangschaltung in ein höheres Übersetzungsverhältnis. Durch die automatisierte Schaltung der Gangschaltung kann der beim Schalten typischerweise auftretende Drehmomentsprung minimiert und der Zeitschaltpunkt optimiert werden. Es entsteht ein sehr komfortables Fahrgefühl.

Vorzugsweise erfolgt die Schaltung der elektronisch steuerbaren Gangschaltung nach der Steuerung des Drehmoments des Elektromotors. Dadurch erfolgt eine Anpassung des Drehmoments des Elektromotors vor dem Schalten der Gangschaltung, wodurch der Drehmomentsprung beim Schalten minimiert und eine mit dem Fahrverhalten abgestimmte Motorsteuerung realisiert wird.

Das erfindungsgemäße Steuergerät ist dazu eingerichtet das erfindungsgemäße Verfahren auszuführen. Das Steuergerät weist wenigstens eine Recheneinheit auf. Diese Recheneinheit erfasst eine das Tretdrehmoment des Radfahrers repräsentierende Größe. Außerdem wird eine das eingelegte Übersetzungsverhältnis der Gangschaltung repräsentierende Größe erfasst. Die Recheneinheit erzeugt ein Steuersignal für den Elektromotor in Abhängigkeit des erfassten Tretdrehmomentes und des erfassten Übersetzungsverhältnisses. Ein erfindungsgemäßes Steuergerät steuert das Motordrehmoment für ein besonders angenehmes Fahrgefühl beim Schalten der Gangschaltung.

Erfindungsgemäß erfasst die Recheneinheit eine die Trittfrequenz des Radfahrers repräsentierende Größe. Die Recheneinheit erzeugt das Steuersignal für den Elektromotor zusätzlich in Abhängigkeit der erfassten Trittfrequenz. Dies weist den Vorteil einer optimierten Anpassung der Drehmomentsteuerung an das Fahrverhalten des Radfahrers auf.

Weiterhin erzeugt die Recheneinheit des Steuergerätes erfindungsgemäß ein weiteres Steuersignal für eine elektronisch steuerbare Gangschaltung in Abhängigkeit des erfassten Tretdrehmoments und/oder der erfassten Trittfrequenz. Dadurch entsteht der Vorteil, dass das Steuergerät die Schaltung der Gangschaltung übernimmt und der Radfahrer sich beispielsweise verstärkt auf den Verkehr konzentrieren kann.

Dabei erfolgt die Schaltung in ein anderes Übersetzungsverhältnis durch das weitere Steuersignal in Abhängigkeit der Steuerung des Motordrehmoments. Durch die Kopplung der Steuerung des Drehmoments und einem Schalten der Gangschaltung kann ein sehr stetiger und sanfter Drehmomentverlauf für den Radfahrer realisiert werden.

Das erfindungsgemäße Elektrofahrrad umfasst wenigstens einen Elektromotor zur Kraftunterstützung des Radfahrers beim Antrieb des Elektrofahrrads. Außerdem sind ein erster Sensor zum Erfassen eines Tretdrehmomentes des Radfahrers und ein zweiter Sensor zum Erfassen eines eingelegten Übersetzungsverhältnisses der Gangschaltung am Elektrofahrrad angeordnet. Das Elektrofahrrad weist ein Steuergerät zur Steuerung des Elektromotors in Abhängigkeit des erfassten Tretdrehmomentes und des erfassten Übersetzungsverhältnisses auf. Das erfindungsgemäße Elektrofahrrad realisiert vorteilhafterweise ein komfortables Fahrgefühl beim Schalten des Übersetzungsverhältnisses.

Erfindungsgemäß weist das Elektrofahrrad eine elektronisch steuerbare Gangschaltung auf. Das Steuergerät steuert in dieser Ausgestaltung die elektronische Gangschaltung in Abhängigkeit des Tretdrehmomentes und/oder der Trittfrequenz an. Die automatische Schaltung des Übersetzungsverhältnisses erlaubt es dem Radfahrer sich besser auf das Radfahren bzw. den Verkehr konzentrieren zu können, wodurch ein sichereres Radfahren und ein komfortableres Fahrgefühl entstehen.

Kurze Beschreibung der Zeichnungen

Die vorliegende Erfindung wird nachfolgend anhand bevorzugter Ausführungsformen und beigefügter Zeichnungen erläutert.

Figur 1: Elektrofahrrad zur erfindungsgemäßen Durchführung des Steuerungsverfahrens

Figur 2a: Ablaufdiagramm zum erfindungsgemäßen Steuerungsverfahren der Ansteuerung eines Elektromotors

Figur 2b: Ablaufdiagramm zum Steuerungsverfahren mit Ansteuerung bei Änderung eines Übersetzungsverhältnisses der Gangschaltung

Figur 2c: Ablaufdiagramm zum Steuerungsverfahren mit Schaltung einer elektronisch steuerbaren Gangschaltung

Figur 3: Steuergerät zur erfindungsgemäßen Durchführung des Steuerungsverfahrens

Ausführungsbeispiele

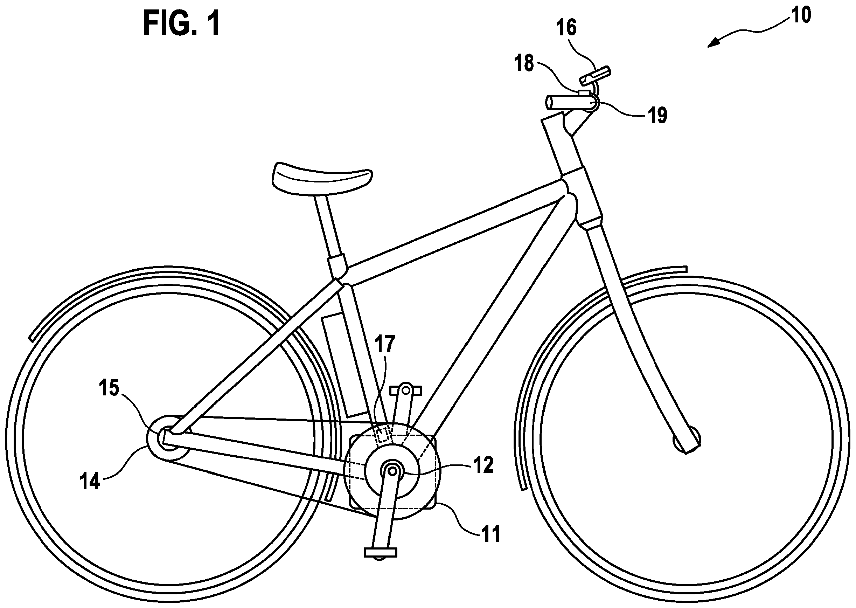

In Figur 1 ist ein Elektrofahrrad 10 skizziert. Das Elektrofahrrad 10 weist einen Akkumulator und einen Elektromotor 11 auf. Der Elektromotor 11 kann als Mittelmotor an der Kurbelwelle ausgeführt oder alternativ auch in der Nabe des Vorder- oder Hinterrades angeordnet sein. Das Elektrofahrrad 10 weist außerdem eine Gangschaltung 14 zur Änderung des Übersetzungsverhältnisses auf, d.h. beispielsweise eine Naben- oder eine Kettenschaltung. Alternativ kann eine stufenlose Gangschaltung 14 vorgesehen sein. Die Schaltung der Gangschaltung 14 erfolgt bevorzugt mittels eines Schalthebels 18 am Lenker. Ein Steuergerät 16 steuert den Elektromotor 11 an. Das Steuergerät 16 kann, wie in Figur 1 dargestellt, bevorzugt am Lenker 19 oder alternativ am Akkumulator oder am Elektromotor 11 angeordnet sein. Die Erfassung des Tretdrehmomentes $M_{Fahrer}$ an der Kurbelwelle erfolgt bevorzugt durch einen ersten Sensor 12. Das eingelegte Übersetzungsverhältnis der Gangschaltung 14 wird zweckmäßigerweise durch einen zweiten Sensor 15 erfasst, welcher beispielsweise an der Gangschaltung 14 oder am Schalthebel 18 der Gangschaltung 14 angeordnet sein kann. Die Erfassung der Trittfrequenz K erfolgt mit einem optionalen, dritten Sensor 17 an bzw. in der Nähe der Kurbelwelle, der Kurbel oder den Pedalen.

Ketten- und Nabenschaltungen von Fahrrädern weisen meist diskrete Übersetzungsverhältnisse i auf, wobei die Stufung der Gänge abhängig von der Bauart der Gangschaltung und dem Hersteller ist. Beispielsweise liegt das Übersetzungsverhältnis einer Kettenschaltung mit einer 53/39-Kettenblatt-Kombination an der Kurbelwelle und einem Ritzelpaket mit 11 bis 21 Zähnen an der Hinterradnabe in diskreten Stufen zwischen 1,86 bis 4,82. Nabenschaltungen mit 3- bzw. 8-Gängen und stufenlose Gangschaltungen weisen ähnliche Übersetzungsverhältnisse wie die beschriebene Kettenschaltung auf. Die Räder eines Fahrrades drehen sich bei einem niedrigen Übersetzungsverhältnis von i = 2 demnach beispielsweise mit der doppelten Drehzahl der Trittfrequenz des Radfahrers.

Die Geschwindigkeit v eines Fahrrades lässt sich allgemein als Produkt aus dem eingelegten Übersetzungsverhältnis i der Gangschaltung 14, der Trittfrequenz K und dem äußeren Radumfang U ableiten. Dies gilt allgemein solange das Fahrrad aktiv angetrieben wird, d.h. kein Leerlauf oder ein Bremsen vorliegt. Beispielsweise wird durch das Treten eines Radfahrers bei einem Übersetzungsverhältnis von i = 2 mit einer Trittfrequenz von K = 80 rpm und einem äußeren Radumfang U = ca. 2,1 m (28" Zoll Rennradreifen) eine Geschwindigkeit v = ca. 20 km/h erreicht, siehe auch Gleichung (2).

$$v = K \cdot i \cdot U \qquad\qquad (2)$$

Die Tretleistung $P_{Fahrer}$ eines Radfahrers kann zum Zeitpunkt des Schaltens eines Übersetzungsverhältnisses näherungsweise gleichbleibend angenommen werden. Sie lässt sich als Produkt der Trittfrequenz K und des Tretdrehmomentes $M_{Fahrer}$ des Radfahrers beschreiben, siehe Gleichung (3).

$$P_{Fahrer} = M_{Fahrer} \cdot K \qquad\qquad (3)$$

Um beispielsweise bei einer Steigung auf der Fahrstrecke das Tretdrehmoment $M_{Fahrer}$ zu reduzieren, schaltet der Radfahrer in ein niedrigeres Übersetzungsverhältnis i einer Gangschaltung 14, wobei sich gleichzeitig die Trittfrequenz K erhöht. Da beim Schalten nicht gebremst wird, bleibt die Geschwindigkeit v des Fahrrads zum unmittelbaren Zeitpunktpunkt des Schalten gleich ($v_1=v_2$). Die Trittfrequenz K ändert sich in Abhängigkeit des Übersetzungsverhältnisses i nach Gleichung (4) diskret, d.h. beispielsweise in Abhängigkeit der Stufung der Gangschaltung.

$$v_2 = v_1 \quad \Rightarrow \quad K_2 = K_1 \cdot \frac{i_1}{i_2} \qquad\qquad (4)$$

Bei gleichbleibender Tretleistung $P_{Fahrer}$ zum Zeitpunkt des Schaltens eines Übersetzungsverhältnisses folgt eine Abhängigkeit des Tretdrehmoments $M_{Fahrer,2}$ von den Übersetzungsverhältnissen $i_1$ und $i_2$ sowie dem Tretdrehmoment $M_{Fahrer,1}$ nach Gleichung (5).

$$M_{Fahrer,2} = M_{Fahrer,1} \cdot \frac{i_2}{i_1} \qquad\qquad (5)$$

Die Steuerung des Elektromotors 11 von einem Elektrofahrrad erfolgt typischerweise im Stand der Technik in Abhängigkeit vom Tretdrehmoments $M_{Fahrer}$ oder der Trittfrequenz K des Radfahrers. Beispielsweise erfolgt die Ansteuerung in linearer Abhängigkeit des Tretdrehmomentes $M_{Fahrer}$ und eines Assistenzverhältnisses a. Das Assistenzverhältnis $\alpha$ ist der Quotient aus dem Drehmoment $M_{Motor}$ des Elektromotors und einem Tretdrehmoment $M_{Fahrer}$ des Radfahrers, siehe Gleichung (6).

$$\alpha = \frac{M_{Motor}}{M_{Fahrer}} \qquad\qquad (6)$$

Beim Schalten eines Übersetzungsverhältnisses von $i_1$ auf $i_2$ ändern sich das Tretdrehmoment $M_{Fahrer}$ folglich diskret (siehe Gleichung (5)). Demnach ändert sich durch eine Ansteuerung mit einem konstantem Assistenzverhältnis $\alpha$ beim Schalten das Drehmoment $M_{Motor}$ des Elektromotors 11 ebenfalls diskret.

Bei einem Elektrofahrrad 10 repräsentiert die Gesamtleistung $P_{Elektrofahrrad}$ die Summe aus der Tretleistung $P_{Fahrer}$ des Radfahrers und der Motorleistung $P_{Motor}$, wobei die Motorleistung $P_{Motor}$ als Produkt aus dem Drehmoment $M_{Motor}$ des Elektromotors 11 und der Winkelgeschwindigkeit $\omega$ beschrieben werden kann. Die Winkelgeschwindigkeit $\omega$ entspricht für den Radfahrer der Trittfrequenz und es folgt Gleichung (7).

$$P_{Elektrofahrrad} = P_{Fahrer} + P_{Motor}$$
$$= M_{Fahrer} \cdot K + M_{Motor} \cdot \varpi \qquad (7)$$

Die Winkelgeschwindigkeit $\omega$ des Elektromotors 11 und die Trittfrequenz K des Radfahrers sind bei einem Elektrofahrrad 10 mit Mittelmotor gekoppelt, da zwischen beiden ein festes Übersetzungsverhältnis c vorliegt. Deshalb folgt mittels algebraischer Vereinfachungen Gleichung (8).

$$P_{Elektrofahrrad} = M_{Fahrer} \cdot K \cdot \left(1 + \alpha \cdot c\right) \qquad (8)$$

Die Gesamtleistung $P_{Elektrofahrrad}$ eines Elektrofahrrads mit Mittelmotor ist beim Schalten eines Übersetzungsverhältnisses mit einem konstanten Assistenzverhältnis $\alpha$ demnach ebenfalls konstant, weil das Produkt aus dem Tretdrehmoment $M_{Fahrer}$ des Radfahrers und der Trittfrequenz K beim Schalten der Gangschaltung, wie oben beschrieben, als konstant anzunehmen ist (siehe Gleichungen (3) und (8)).

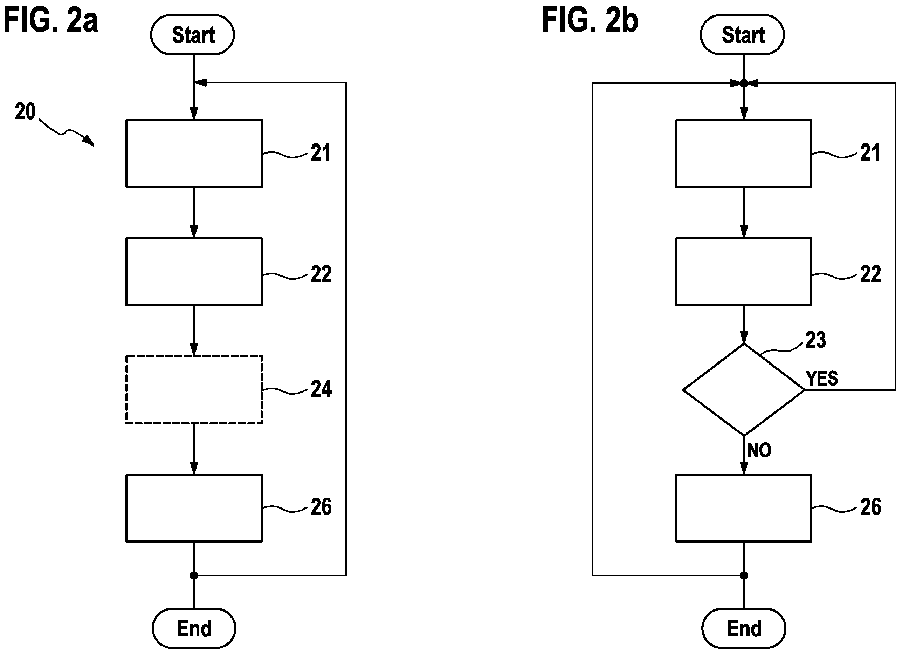

In Figur 2a ist ein mögliches Ablaufdiagramm des erfindungsgemäßen Steuerungsverfahrens 20 zur Steuerung des Elektromotors 11 eines Elektrofahrrads 10 dargestellt. In einem Schritt 21 wird ein Tretdrehmoment $M_{Fahrer}$ eines Radfahrers erfasst. In einem weiteren Schritt 22 wird das eingelegte Übersetzungsverhältnis der Gangschaltung 14 erfasst. In einem weiteren Schritt 26 wird der Elektromotor 11 in Abhängigkeit des erfassten Tretdrehmomentes und des erfassten Übersetzungsverhältnisses angesteuert. Durch die Steuerung des Elektromotors 11 wird ein Drehmoment $M_{Motor}$ zum Antrieb des Elektrofahrrads erzeugt. Das erfindungsgemäße Verfahren kann kontinuierlich oder wiederholt ablaufen.

Nach dem Schritt 22 wird in Schritt 24 die Trittfrequenz des Radfahrers erfasst. In dieser Ausführung wird der Elektromotor 11 im Schritt 26 zusätzlich in Abhängigkeit der erfassten Trittfrequenz angesteuert.

In dem alternativen Ablaufdiagramm in Figur 2b ist ein weiterer Schritt 23 zum Vergleich des erfassten Übersetzungsverhältnisses $i_2$ mit dem unmittelbar vorher erfassten Übersetzungsverhältnisses $i_1$ dargestellt. Ist das aktuell erfasste Übersetzungsverhältnisses $i_2$ gleich dem vorher erfassten Übersetzungsverhältnisses $i_1$, wird keine Änderung des Übersetzungsverhältnisses i erkannt und es erfolgt keine Anpassung des Motordrehmoments $M_{Motor}$. Die Anpassung des Motordrehmomentes $M_{Motor}$ im Schritt 26 erfolgt nur nach dem Erkennen eines veränderten Übersetzungsverhältnisses i. Das erfindungsgemäße Verfahren nach dem Ablaufdiagramm in Figur 2b kann kontinuierlich oder wiederholt ablaufen.

In einer Weiterbildung des Verfahrens nach dem Ablaufdiagramm in Figur 2b erfolgt die Anpassung des Motordrehmoments $M_{Motor}$ im Schritt 26 zur Realisierung einer gleichbleibenden Gesamtleistung P des Elektrofahrrads 10 unter der Prämisse eines konstanten Tretdrehmoments $M_{Fahrer}$ des Radfahrers. Die Gesamtleistung P des Elektrofahrrads 10 umfasst eine Summe der Motorleistung $P_{Motor}$ und der Leistung $P_{Fahrer}$ des Radfahrers. Die durch den Radfahrer ohne das Verfahren notwendige Anpassung des Tretdrehmoments $M_{Fahrer}$ beim Schalten wird durch die Anpassung des Motordrehmoments $M_{Motor}$ kompensiert. Aus der Annahme eines konstanten Tretdrehmoments $M_{Fahrer}$ des Radfahrers beim Schalten folgt, dass in dieser Weiterbildung der Erfindung beim Schalten vom Radfahrer lediglich die Trittfrequenz K an das neue Übersetzungsverhältnis $i_2$ der Gangschaltung 14 angepasst wird. Die Steuerung des Motordrehmoments $M_{Motor}$ erfolgt dabei in Abhängigkeit eines nicht konstanten Assistenzverhältnisses. Das Assistenzverhältnis $\alpha_2$ nach dem Schalten ist nach Gleichung (7) abhängig vom eingelegten Übersetzungsverhältnisses $i_2$ durch das Schalten und abhängig vom unmittelbar vorher eingelegten Übersetzungsverhältnisses $i_1$ sowie vom unmittelbar vorher verwendeten Assistenzverhältnis $\alpha_1$. Demnach erfolgt in dieser Ausgestaltung der Erfindung im Schritt 26 nach dem Schalten des Übersetzungsverhältnis $i_2$ eine Änderung des Motordrehmoments $M_{Motor}$, wobei das Assistenzverhältnis $\alpha$ beim Schalten in ein höheres Übersetzungsverhältnis gesteigert und beim Schalten in ein niedrigeres Übersetzungsverhältnis reduziert wird.

$$M_{Fahrer,1} \cdot \left(1 + \alpha_1\right) \cdot K_1 = M_{Fahrer,1} \cdot \left(1 + \alpha_2\right) \cdot K_2$$

$$\Rightarrow \alpha_2 = \left(1 + \alpha_1\right) \cdot \frac{i_2}{i_1} - 1 \tag{7}$$

Dies bedeutet beispielsweise, dass beim Schalten eines Übersetzungsverhältnis von $i_1$ = 2 bei einem ursprünglichen Assistenzverhältnis von $\alpha_1$ = 1 nach dem Schalten auf $i_2$ = 2,5 ein neues Assistenzverhältnis von $\alpha_2$ = 1,5 resultiert. Das Drehmoment $M_{Motor}$ des Elektromotors 11 wird in diesem Beispiel unmittelbar nach dem Schalten somit um 50 % erhöht. Die notwendige Trittfrequenz K erniedrigt sich entsprechend Gleichung (3) um 20 %. Der Radfahrer kann in diesem Beispiel, wie in der obigen Weiterbildung des erfindungsgemäßen Verfahrens beschrieben, das Tretdrehmoment $M_{Fahrer}$ beim Schalten konstant halten.

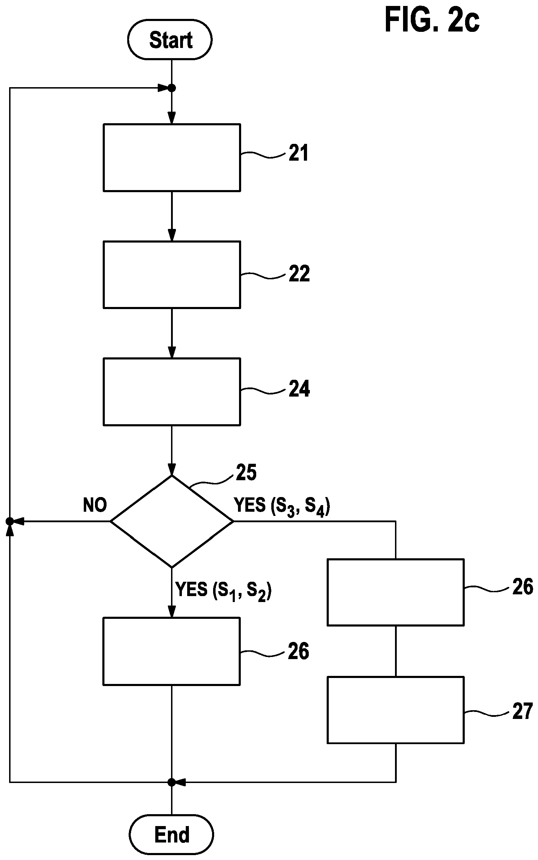

Im Ablaufdiagramm in Figur 2c ist eine weitere besonders bevorzugte Ausgestaltung der Erfindung dargestellt. In dieser Ausgestaltung wird vor der Steuerung des Motordrehmoments $M_{Motor}$ ein Schritt 24 zur Erfassung der Trittfrequenz K durchgeführt. Außerdem wird in einem Schritt 25 nach der Erfassung der Trittfrequenz K und vor der Steuerung des Motordrehmoments $M_{Motor}$ die Trittfrequenz K mit vier Schwellenwerten verglichen. Liegt die Trittfrequenz zwischen dem ersten Schwellenwertes $S_1$ und dem zweiten Schwellenwertes $S_2$ erfolgt keine Anpassung des Motordrehmoments $M_{Motor}$. Erreicht oder überschreitet die erfasste Trittfrequenz K den ersten Schwellenwert $S_1$ oder den zweiten Schwellenwert $S_2$ so erfolgt im Schritt 26 die Steuerung des Motordrehmoments $M_{Motor}$ nach einem erfindungsgemäßen Verfahren, wobei diese Steuerung zusätzlich in Abhängigkeit der Trittfrequenz K erfolgen kann. Erreicht oder überschreitet die Trittfrequenz den dritten Schwellenwert $S_3$ oder den vierten Schwellenwert $S_4$ erfolgt im Schritt 26 die Steuerung des Motordrehmoments $M_{Motor}$ und danach im Schritt 27 die Schaltung einer elektrisch steuerbaren Gangschaltung 14 in ein anderes Übersetzungsverhältnis $i_2$. Das erfindungsgemäße Verfahren nach dem Ablaufdiagramm in Figur 2c kann kontinuierlich oder wiederholt ablaufen.

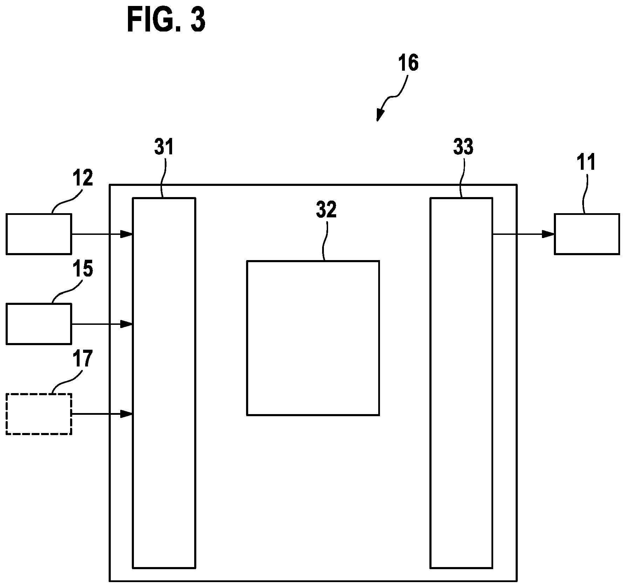

In Figur 3 ist das erfindungsgemäße Steuergerät 16 dargestellt. Das Steuergerät 16 weist wenigstens eine Recheneinheit 32 auf. Die Recheneinheit 32 erfasst eine das Tretdrehmoment $M_{Fahrer}$ repräsentierende Größe und eine das eingelegte Übersetzungsverhältnis i repräsentierende Größe. Außerdem erzeugt die Recheneinheit 32 ein Steuersignal für den Elektromotor 11 zur Anpassung eines Motordrehmoments $M_{Motor}$. Das Steuergerät kann zum Erfassen von Größen eine Empfangseinheit 31 und zur Ausgabe des Sensorsignals eine Ausgabeeinheit 33 aufweisen. Die Recheneinheit 32 erfasst zusätzlich eine die Trittfrequenz K repräsentierende Größe. Die erfassten Größen können beispielsweise Sensorgrößen des ersten Sensors 12, des zweiten Sensors 15 und/oder des dritten Sensors 17 darstellen.

## Patentansprüche

1. Steuerungsverfahren für einen Elektromotor (11) eines Elektrofahrrads (10) wenigstens umfassend die Schritte

- Erfassung (21) eines Tretdrehmoments ($M_{Fahrer}$) des Radfahrers, und
- Erfassung (22) des eingelegten Übersetzungsverhältnisses (i) der Gangschaltung (14),
- Erfassung (24) einer aktuellen Trittfrequenz (K) des Radfahrers, und
- Steuerung (26) des Elektromotors (11) in Abhängigkeit des erfassten Tretdrehmomentes ($M_{Fahrer}$) und des erfassten Übersetzungsverhältnisses (i) und in Abhängigkeit der erfassten Trittfrequenz (K) zur Erzeugung eines Drehmoments ($M_{Motor}$) für den Antrieb des Elektrofahrrads (10), und
- Vergleich (25) der erfassten Trittfrequenz (K) mit einem ersten Schwellenwert (S1) und einem zweiten Schwellenwert (S2), wobei

  o beim Erreichen oder Überschreiten des ersten Schwellenwerts (S1) die Steuerung (26) das Drehmoment ($M_{Motor}$) des Elektromotors (11) reduziert, und
  o beim Erreichen oder Überschreiten des zweiten Schwellenwerts (S2) die Steuerung (26) das Drehmoment ($M_{Motor}$) des Elektromotors (11) erhöht, und

- Vergleich (25) der erfassten Trittfrequenz (K) mit einem dritten Schwellenwert (S3) und einem vierten Schwellenwert (S4), wobei

  o beim Erreichen oder Überschreiten des dritten Schwellenwerts (S3) eine Schaltung (27) einer elektronisch steuerbaren Gangschaltung (14) in ein niedrigeres Übersetzungsverhältnis erfolgt, und
  o beim Erreichen oder Überschreiten des vierten Schwellenwerts (S4) eine Schaltung (27) der elektronisch steuerbaren Gangschaltung (14) in ein höheres Übersetzungsverhältnis erfolgt.

2. Steuerungsverfahren nach Anspruch 1, **dadurch gekennzeichnet, dass**

    • ein Vergleich (23) des erfassten Übersetzungsverhältnisses (i) mit einem unmittelbar vorher erfassten Übersetzungsverhältnis (ii) der Gangschaltung (14) durchgeführt wird, und
    beim Erkennen einer Änderung des Übersetzungsverhältnisses
    • die Steuerung (26) das Drehmoment ($M_{Motor}$) zur Realisierung einer gleichbleibenden Gesamtleistung ($P_{Elektrofahrrad}$) des Elektrofahrrads (10) zusätzlich in Abhängigkeit der Änderung des Übersetzungsverhältnisses erhöht oder reduziert.

3. Steuerungsverfahren nach einem der vorhergehenden Ansprüche, **dadurch gekennzeichnet, dass** die Steuerung (26) das Drehmoment ($M_{Motor}$) stetig steuert.

4. Steuerungsverfahren nach einem der vorhergehenden Ansprüche, **dadurch gekennzeichnet, dass** die Schaltung (27) der Gangschaltung (14) nach der Steuerung (26) des Drehmoments ($M_{Motor}$) des Elektromotors (11) erfolgt.

5. Steuergerät (16), welches dazu eingerichtet ist, ein Steuerungsverfahren nach einem der Ansprüche 1 bis 4 auszuführen, wobei das Steuergerät (16) wenigstens eine Recheneinheit (32) aufweist, welche

    • eine das Tretdrehmoment ($M_{Fahrer}$) des Radfahrers repräsentierende Größe erfasst,
    • eine das eingelegte Übersetzungsverhältnis (i) der Gangschaltung (14) repräsentierende Größe erfasst,
    • eine die Trittfrequenz (K) des Radfahrers repräsentierende Größe erfasst, und
    • ein Steuersignal für den Elektromotor (11) in Abhängigkeit des erfassten Tretdrehmomentes ($M_{Fahrer}$) und des erfassten Übersetzungsverhältnisses (i) und in Abhängigkeit der erfassten Trittfrequenz (K) erzeugt, wobei
    • die Recheneinheit (32) ein weiteres Steuersignal für eine elektronisch steuerbare Gangschaltung (14) in Abhängigkeit des erfassten Tretdrehmoments ($M_{Fahrer}$) und/oder der erfassten Trittfrequenz (K) erzeugt, wobei die Schaltung (27) in ein anderes Übersetzungsverhältnis ($i_2$) in Abhängigkeit der Steuerung (26) des Drehmoments ($M_{Motor}$) des Elektromotors (11) erfolgt.

6. Elektrofahrrad, wobei das Elektrofahrrad wenigstens folgende Komponenten umfasst

    • einen Elektromotor (11) zum Antrieb des Elektrofahrrads (10),
    • einen ersten Sensor (12) zum Erfassen eines Tretdrehmomentes ($M_{Fahrer}$) des Radfahrers, und
    • einen zweiten Sensor (15) zum Erfassen eines eingelegten Übersetzungsverhältnisses (i) der Gangschaltung (14),
    **dadurch gekennzeichnet, dass**
    • ein Steuergerät (16) nach Anspruch 5 zur Steuerung (26) des Elektromotors (11) in Abhängigkeit des erfassten Tretdrehmomentes ($M_{Fahrer}$) und des erfassten Übersetzungsverhältnisses (iaktuell) angeordnet ist, und umfassend eine elektronisch steuerbare Gangschaltung (14), wobei das Steuergerät (16) die elektronische Gangschaltung (14) in Abhängigkeit des Tretdrehmomentes ($M_{Fahrer}$) und/oder der Trittfrequenz (K) ansteuert.

## Claims

1. Control method for an electric motor (11) of an electric bicycle (10), at least comprising the steps

    • detecting (21) a pedalling torque ($M_{rider}$) of the cyclist, and
    • detecting (22) the engaged transmission ratio (i) of the gearshift (14),
    • detecting (24) a current pedalling frequency (K) of the cyclist, and
    • controlling (26) the electric motor (11) as a function of the detected pedalling torque ($M_{rider}$) and of the detected transmission ratio (i) and as a function of the detected pedalling frequency (K) in order to generate a torque ($M_{motor}$) for the drive of the electric bicycle (10), and
    • comparing (25) the detected pedalling frequency (K) with a first threshold value (S1) and a second threshold value (S2), wherein

        ◦ when the first threshold value (S1) is reached or exceeded the control process (26) reduces the torque ($M_{motor}$) of the electric motor (11), and
        ◦ when the second threshold value (S2) is reached or exceeded the control process (26) increases the torque ($M_{motor}$) of the electric motor (11), and

• comparing (25) the detected pedalling frequency (K) with a third threshold value (S3) and a fourth threshold value (S4), wherein

◦ when the third threshold value (S3) is reached or exceeded a shifting process (27) of an electronically controllable gearshift (14) into a relatively low transmission ratio is carried out, and
◦ when the fourth threshold value (S4) is reached or exceeded a shifting process (27) of the electronically controllable gearshift (14) into a relatively high transmission ratio is carried out.

2. Control method according to Claim 1, **characterized in that**

• a comparison (23) of the detected transmission ratio (i) with a transmission ratio (ii) of the gearshift (14) which has been detected immediately beforehand is carried out, and
when a change in the transmission ratio is detected
• the control process (26) increases or reduces the torque ($M_{motor}$) in order to implement a constant overall power ($P_{electricbicycle}$) of the electric bicycle (10) additionally as a function of the change in the transmission ratio.

3. Control method according to either of the preceding claims, **characterized in that** the control process (26) controls the torque ($M_{motor}$) continuously.

4. Control method according to one of the preceding claims, **characterized in that** the shifting process (27) of the gearshift (14) is carried out after the control process (26) of the torque ($M_{motor}$) of the electric motor (11) .

5. Control apparatus (16) which is designed to execute a control method according to one of Claims 1 to 4, wherein the control apparatus (16) has at least one computing unit (32) which

• detects a variable representing the pedalling torque ($M_{rider}$) of the cyclist,
• detects a variable representing the engaged transmission ratio (i) of the gearshift (14),
• detects a variable representing the pedalling frequency (K) of the cyclist, and
• generates a control signal for the electric motor (11) as a function of the detected pedalling torque ($M_{rider}$) and of the detected transmission ratio (i) and as a function of the detected pedalling frequency (K), wherein
• the computing unit (32) generates a further control signal for an electronically controllable gearshift (14) as a function of the detected pedalling torque ($M_{rider}$) and/or of the detected pedalling frequency (K), wherein the shifting process (27) into another transmission ratio ($i_2$) is carried out as a function of the control process (26) of the torque ($M_{motor}$) of the electric motor (11).

6. Electric bicycle, wherein the electric bicycle comprises at least the following components

• an electric motor (11) for providing drive to the electric bicycle (10),
• a first sensor (12) for detecting a pedalling torque ($M_{rider}$) of the cyclist, and
• a second sensor (15) for detecting an engaged transmission ratio (i) of the gearshift (14),
**characterized in that**
• a control apparatus (16) according to Claim 5 for controlling (26) the electric motor (11) as a function of the detected pedalling torque ($M_{rider}$) and of the detected transmission ratio ($i_{current}$) is arranged, and comprising an electronically controllable gearshift (14), wherein the control apparatus (16) actuates the electronic gearshift (14) as a function of the pedalling torque ($M_{rider}$) and/or of the pedalling frequency (K).

**Revendications**

1. Procédé de commande pour un moteur électrique (11) d'une bicyclette électrique (10), comprenant au moins les étapes consistant à

• détecter (21) un couple de pédalage ($M_{Fahrer}$) du cycliste, et
• détecter (22) le rapport de vitesse engagé (i) du changement de vitesse (14),
• détecter (24) une fréquence de pédalage actuelle (K) du cycliste, et
• commander (26) le moteur électrique (11) en fonction du couple de pédalage ($M_{Fahrer}$) détecté et du rapport de vitesse (i) détecté et en fonction de la fréquence de pédalage (K) détectée pour générer un couple ($M_{Motor}$) pour l'entraînement de la bicyclette électrique (10), et

• comparer (25) la fréquence de pédalage (K) détectée avec une première valeur seuil (S1) et une deuxième valeur seuil (S2), dans lequel

o lorsque la première valeur seuil (S1) est atteinte ou dépassée, la commande (26) réduit le couple ($M_{Motor}$) du moteur électrique (11), et
◦ lorsque la deuxième valeur seuil (S2) est atteinte ou dépassée, la commande (26) augmente le couple ($M_{Motor}$) du moteur électrique (11), et

• comparer (25) la fréquence de pédalage (K) détectée avec une troisième valeur seuil (S3) et une quatrième valeur seuil (S4), dans lequel

◦ lorsque la troisième valeur seuil (S3) est atteinte ou dépassée, un passage (27) d'un changement de vitesse (14) à commande électronique à un rapport de vitesse inférieur est effectué, et
◦ lorsque la quatrième valeur seuil (S4) est atteinte ou dépassée, un passage (27) du changement de vitesse (14) à commande électronique à un rapport de vitesse supérieur est effectué.

2.  Procédé de commande selon la revendication 1, **caractérisé en ce que**

• une comparaison (23) du rapport de vitesse (i) détecté avec un rapport de vitesse détecté immédiatement avant ($i_1$) du changement de vitesse (14) est effectuée, et
lorsqu'une modification du rapport de vitesse est identifiée
• la commande (26) augmente ou réduit le couple ($M_{Motor}$) pour réaliser une performance globale constante ($P_{Elektrofahrrad}$) de la bicyclette électrique (10) également en fonction de la modification du rapport de vitesse.

3.  Procédé de commande selon l'une quelconque des revendications précédentes, **caractérisé en ce que** la commande (26) commande le couple ($M_{Motor}$) en continu.

4.  Procédé de commande selon l'une quelconque des revendications précédentes, **caractérisé en ce que** le passage (27) du changement de vitesse (14) est effectué après la commande (26) du couple ($M_{Motor}$) du moteur électrique (11).

5.  Appareil de commande (16) qui est aménagé pour effectuer un procédé de commande selon l'une quelconque des revendications 1 à 4, l'appareil de commande (16) présentant au moins une unité de calcul (32) qui

• détecte une grandeur représentant le couple de pédalage ($M_{Fahrer}$) du cycliste,
• détecte une grandeur représentant le rapport de vitesse (i) engagé du changement de vitesse (14),
• détecte une grandeur représentant la fréquence de pédalage (K) du cycliste, et
• génère un signal de commande pour le moteur électrique (11) en fonction du couple de pédalage ($M_{Fahrer}$) détecté et du rapport de vitesse (i) détecté et en fonction de la fréquence de pédalage (K) détectée, dans lequel
• l'unité de calcul (32) génère un autre signal de commande pour un changement de vitesse (14) à commande électronique en fonction du couple de pédalage ($M_{Fahrer}$) détecté et/ou de la fréquence de pédalage (K) détectée, le passage (27) à un autre rapport de vitesse ($i_2$) étant effectué en fonction de la commande (26) du couple ($M_{Motor}$) du moteur électrique (11) .

6.  Bicyclette électrique, la bicyclette électrique comprenant au moins les composants suivants

• un moteur électrique (11) pour entraîner la bicyclette électrique (10),
• un premier capteur (12) pour détecter un couple de pédalage ($M_{Fahrer}$) du cycliste, et
• un deuxième capteur (15) pour détecter un rapport de vitesse engagé (i) du changement de vitesse (14),
**caractérisée en ce que**
• un appareil de commande (16) selon la revendication 5 est disposé pour la commande (26) du moteur électrique (11) en fonction du couple de pédalage ($M_{Fahrer}$) détecté et du rapport de vitesse ($i_{aktuell}$) détecté, et comprenant un changement de vitesse (14) à commande électronique, l'appareil de commande (16) pilotant le changement de vitesse (14) électronique en fonction du couple de pédalage ($M_{Fahrer}$) et/ou de la fréquence de pédalage (K).

EP 3 464 044 B1

# FIG. 1

FIG. 2a

FIG. 2b

EP 3 464 044 B1

FIG. 2c

## FIG. 3

**EP 3 464 044 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010028658 A1